Europäisches Patentamt

European Patent Office

Office européen des brevets

(19)

(11) Veröffentlichungsnummer: **0 281 666 B1**

# (12) EUROPÄISCHE PATENTSCHRIFT

(45) Veröffentlichungstag der Patentschrift: **13.11.91**

(51) Int. Cl.5: **B04B 9/08**, F16D 1/08

(21) Anmeldenummer: **87113941.6**

(22) Anmeldetag: **24.09.87**

(54) Zentrifuge.

(30) Priorität: **13.03.87 DE 3708136**

(43) Veröffentlichungstag der Anmeldung:
**14.09.88 Patentblatt 88/37**

(45) Bekanntmachung des Hinweises auf die
Patenterteilung:
**13.11.91 Patentblatt 91/46**

(84) Benannte Vertragsstaaten:
**DE FR GB**

(56) Entgegenhaltungen:
**EP-A- 0 083 888**
**EP-B- 0 007 217**
**DE-A- 2 412 994**
**DE-A- 2 501 513**
**US-A- 2 613 968**

(73) Patentinhaber: **Heraeus Sepatech GmbH**
**Am Kalkberg Postfach 1220**
**W-3360 Osterode am Harz(DE)**

(72) Erfinder: **Meyer, Manfred**
**Wilhelm Busch Strasse 10**
**W-3360 Osterode/Harz(DE)**
Erfinder: **Müller, Dieter**
**Am Johannisborn 8**
**W-3363 Badenhausen(DE)**
Erfinder: **Schlusche, Siegfried**
**Igelweg 10**
**W-3360 Osterode/Harz(DE)**

(74) Vertreter: **Heinen, Gerhard, Dr.**
**Heraeus Holding GmbH Heraeusstrasse**
**12-14**
**W-6450 Hanau am Main(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

EP 0 281 666 B1

**Beschreibung**

Die Erfindung betrifft eine Zentrifuge mit einem auf eine von einem Antriebsmotor angetriebene Welle aufgesetzten Arbeitskopf, bei der zwischen der Welle und einer zentralen Bohrung des Arbeitskopfes eine längsgeschlitzte Zwischenhülse angeordnet ist, die über ein Spreizteil mit Außenkegel im Bereich ihrer der Welle abgewandten oberen Stirnseite über ein an dem Ende der Welle verschraubtes Gewindeelemente gegen die Bohrung verspannt ist.

Eine derartige Zentrifuge ist aus der DE-A-25 01 513 gekannt. Bei dieser Zentrifuge ist ein die Antriebswelle verlängerndes, hülsenförmiges Element aufgesetzt, auf das der Arbeitskopf aufgesetzt ist. Der obere Teil dieser Zwischenhülse ist geschlitzt ausgebildet und wird durch einen Spreizkegel über eine axial auf die Welle aufgeschraubte Schraube gegen die Zentralbohrung des Arbeitskopfes verspannt. Eine kraftschlüssige Verbindung kommt nur zwischen der gespreizten Zwischenhülse und dem Arbeitskopf im unteren Bereich der zentralen Bohrung zustande, während der Arbeitskopf im oberen Bereich der Bohrung nicht gezielt verspannt wird.

Der Erfindung liegt die Aufgabe zugrunde, eine auch nach längerem Einsatz und häufigen Lastwechseln sichere, feste, spielfreie Befestigung zwischen dem Arbeitskopf und der Welle einer Zentrifuge zu schaffen, die andererseits eine leichte Lösbarkeit gewährleistet und insbesondere für kleine Zentrifugen geeignet ist.

Diese Aufgabe wird dadurch gelöst, daß die Welle ein konisches Ende aufweist, die Zwischenhülse eine konische diesem Ende angepaßte Innenfläche besitzt und daß das Gewindeelement an seinem Außenumfang einem Vorsprüng aufweist, der im ungespreizten Zustand der Zwischenhülse gegen die Innenseite einer Anschlagfläche der Zwischenhülse einerseits und gegen das spitz zulaufende Ende des Spreizteiles andererseits anliegen.

Durch die konische Ausbildung der Welle und die an den Konus der Welle angepaßte Innenfläche der Zwischenhülse einerseits und dem Spreizkegel am Ende der Welle bzw. der Zwischenhülse andererseits wird eine kraftschlüssige Verbindung zwischen der Welle bzw. der Zwischenhülse und dem Arbeitskopf sowohl im oberen als auch im unteren Bereich der zentralen Bohrung erzielt. Die kraftschlüssige Verbindung im unteren Bereich der zentralen Bohrung erfolgt bereits mit dem Aufsetzen des Arbeitskopfes auf die Welle der Zentrifuge, während die Verbindung im oberen Bereich des Arbeitskopfes durch das anschließende Verspannen des Spreizteiles mit der Zwischenhülse, die gegen die Bohrung des Arbeitskopfes gedrückt wird, erzielt wird. Damit sich auch die Zwischenhülse radial spreizen kann, weist sie axiale Schlitze auf. Um anschließend die miteinander verspannten Teile, beispielsweise beim wechseln eines Arbeitskopfes, wieder lösen zu können, wird der Vorsprüng am Außenumfang des Gewindeelementes zunächst gegen das spitzzulaufende Ende des Spreizteiles gedrückt, so daß dieses aus dem Eingriff mit der Zwischenhülse gelöst wird, bis dann das Gewindeelement zur Anlage mit der Anschlagfläche der Zwischenhülse gelangt und die Zwischenhülse aus dem Eingriff mit dem konischen Ende der Welle löst. Durch das kraftschlüssige Verspannen des Arbeitskopfes im Bereich des oberen und unteren Endes der zentralen Bohrung mit der Welle wird eine spielfreie Halterung des Arbeitskopfes, auch nach längeren Lastwechselzahlen, erzielt. Dieses Spannsystem eignet sich auch für kleine Zentrifugen mit kleinem Durchmesser der Welle, da zwischen der Welle und der zentralen Bohrung des Arbeitskopfes lediglich eine Zwischenhülse eingefügt wird, die in ihrer Wanddicke sehr gering gehalten werden kann.

In einer vorteilhaften Ausgestaltung wird der Vorsprüng des Gewindeelementes durch einen umlaufenden Flansch gebildet der gegen einen nach innen gerichteten Kragen der Zwischenhülse anliegt, wobei dieser Kragen bevorzugt am Ende der Zwischenhülse angeordnet ist. Durch diese Maßnahme ist in jeder Stellung des Gewindeelementes dessen umlaufender Flansch mit dem radialen umlaufenden Kragen der Zwischenhülse verbunden.

Eine sichere Auflage des Arbeitskkopfes auf der Welle bzw. der Zwischenhülse wird durch einen Flansch an dem dem Antriebsmotor zugewandten Ende der Zwischenhülse gewährleistet.

Das Spreizteil ist vorzugsweise an dem Gewindeelement drehbar gelagert, wozu auf das Ende des Gewindelementes eine Sicherungshülse angeordnet ist, die gegen eine äußere axiale Fläche des Spreizteiles anliegt. Zwischen dieser Sicherungshülse und dem Spreizteil kann ein Gleitring eingesetzt sein. Um eine gute Anpassung des Spreizteiles an das Gewindeelement und die Zwischenhülse zu gewährleisten, weist das Spreizteil mindestens einen axialen Dehnungsschlitz, der im Bereich der konischen Flächen ausgeführt ist, auf. Aus dem gleichen Grund kann das Spreizteil aus mindestens zwei schalenförmigen Teilen bestehen, zwischen denen beim Anlegen an das Gewindeelement oder das Spreizteil ein oder zwei Schlitze verbleiben. Außerdem ist mit einer solchen zwei oder mehrteiligen Ausbildung des Spreizteiles ein Aufsetzen des Spreizteiles auf das Gewindeelement ohne eine entsprechende Sicherungshülse möglich, da dann der Sicherungshülse entsprechende Anlageflächen bereits an dem Gewindeelement ausgebildet sein können. Um die Reibung zwischen den Vorsprüngen des Gewindeelementes und der Anschlagfläche der Zwischenhülse zu verringern, ist ein eingefügter Gleitring von Vorteil.

Ausführungsbeispiele der Erfindung sind in der Zeichnung dargestellt und werden nachstehend näher erläutert. Es zeigen

Figur 1    eine Schnittdarstellung eines Arbeitskopfes im Bereich seiner zentralen Bohrung

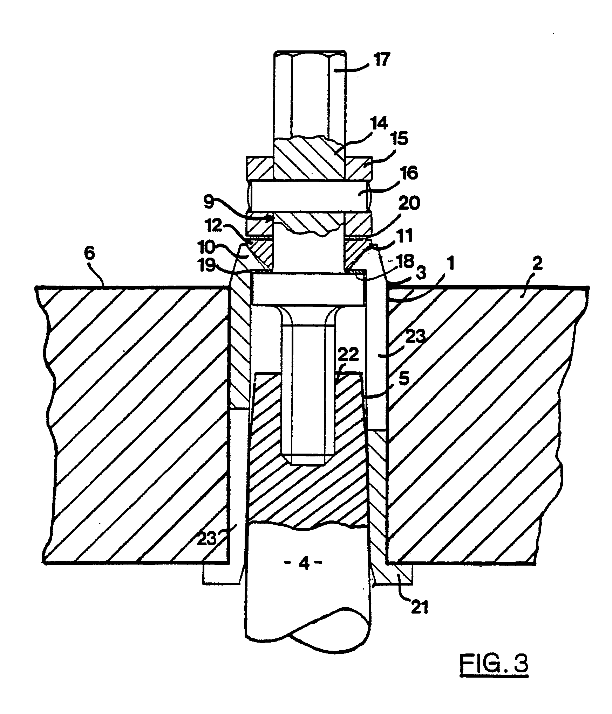

Figur 2    einen Schnitt entlang der Schnittlinie I-I in Figur 1 und

Figur 3    eine Schnittdarstellung eines Arbeitskopfes mit gegenüber der Ausführungsform nach Figur 1 geänderter Verschraubung.

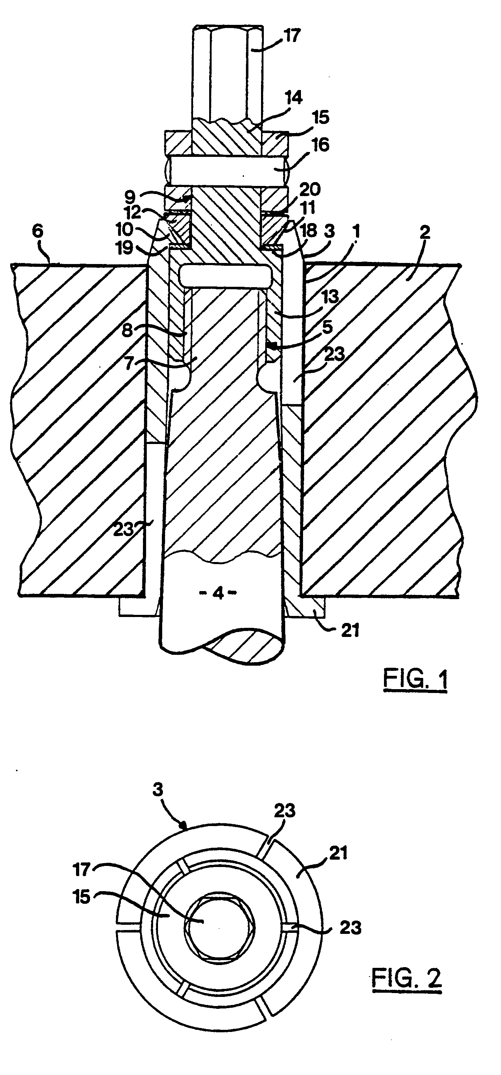

Wie aus Figur 1 ersichtlich ist, ist in einer zentralen Bohrung 1 eines Arbeitskopfes 2 eine Zwischenhülse 3 eingesetzt, die ihrerseits auf das Ende der Welle 4 eines nicht dargestellten Antriebsmotors aufgesetzt ist. Das sich in die zentrale Bohrung 1 bzw. die Zwischenhülse 3 erstreckende Ende 5 der Welle 4 ist in Richtung der Oberseite 6 des Arbeitskopfes 2 konisch verlaufend ausgebildet. An der Stirnseite der Welle 4 ist ein Fortsatz 7 mit Außengewinde 8 angesetzt, auf dem ein Gewindeelement 9 aufgeschraubt ist. Bei diesem Gewindeelement 9 handelt es sich um ein hülsenförmiges Teil 13, das sich in diesem Ausführungsbeispiel mit seinem freien wellenförmigen Ende 14 durch eine Zwischenhülse 3 hindurch erstreckt. Die obere Stirnseite der Zwischenhülse 3 besitzt einen nach innen gerichteten umlaufenden Kragen 10 mit zur Achse der Welle 4 hin abgeschrägt verlaufenden Kegelflächen 11. Gegen diese Kegelflächen 11 liegt ein konisches Spreizteil 12 an, das auf das wellenförmige Ende 14 des Gewindeelementes 9 aufgesteckt ist. Oberhalb des Spreizteiles 12 ist auf das wellenförmige Ende 14 des Gewindeelementes 9 eine Sicherungshülse 15 aufgesetzt, die mit einem Stift 16 an dem Gewindeelement 9 befestigt ist. Das freie Ende des Gewindeelementes 9 ist mit einem Außensechskant 17 versehen, über den das Gewindeelement 9 verdreht werden kann. Im Übergangsbereich zwischen dem hülsenförmigen Teil 13 und dem wellenförmigen Ende 14 des Gewindeelementes 9 ist in Folge der unterschiedlichen Außendurchmesser dieser Teile ein Vorsprüng 18 gebildet, gegen den der Kragen 10 der Zwischenhülse 3 anliegt. Zwischen dem Vorsprüng 18 und dem Kragen 10 ist ein Gleitring 19 eingefügt; ein weiterer Gleitring 20 befindet sich zwischen der axialen Oberseite des Spreizteiles 12 und der unteren axialen Fläche der Sicherungshülse 15. Der Arbeitskopf 2 liegt in der in Figur 1 gezeigten Stellung, in der er fest an der Welle 4 verschraubt ist, auf einem umlaufenden Flansch 21 am unteren Ende der Zwischenhülse 3 auf. Der Vorsprung 18 kann in einzelne Vorsprünge unterteilt werden.

Um den Arbeitskopf 2 aus dem Eingriff mit der Welle 4, wie dies in Figur 1 gezeigt ist, zu lösen, wird das Gewindeelement 9 über den Außensechskant 17 gegen die Welle 4 verdreht, so daß der Vorsprung 18 bzw. der darauf aufliegende Gleitring 19 gegen das spitz zulaufende Ende des Spreizteiles 12 und die Unterseite des Kragens 10 der Zwischenhülse 3 zur Anlage kommt. Mit dem Verdrehen des Gewindeelementes 9 wird zunächst das konische Spreizteil 12 aus dem Eingriff mit der Kegelfläche 11 des Kragens 10 gelöst und beim weiteren Verdrehen des Gewindeelementes 9 in Achsrichtung verschoben, während gleichzeitig die Zwischenhülse 3 von dem konischen Ende 5 der Welle 4 abgezogen wird. Durch diese Anordnung ist ein Lösen des Arbeitskopfes 2 von der Welle 4 auch dann möglich, wenn diese Teile fest ineinander verkeilt sind. Weiterhin hat diese Anordnung den Vorteil, daß einerseits eine Anlage zwischen der Welle 4, der Zwischenhülse 3 und dem Arbeitskopf 2 im unteren Bereich des Arbeitskopfes 2 und andererseites eine Anlage zwischen dem Ende der Welle 4, dem hülsenförmigen Teil 13 des Gewindeelementes 9 und dem oberen Teil der Zwischenhülse 3 im Bereich der Oberseite 6 des Arbeitskopfes 2 gewährleistet ist.

Zum Befestigen des Arbeitskopfes 2 wird zunächst die Zwischenhülse 3 von der Unterseite in die zentrale Bohrung 1 des Arbeitskopfes 2 eingesetzt, so daß der umlaufende Flansch 21 an der Unterseite des Arbeitskopfes zur Anlage gelangt. Anschließend wird der so vorbereitete Arbeitskopf 2 auf das Ende 5 der Welle 4 aufgesetzt und das Gewindeelement 9 mit seinem hülsenförmigen Teil 13 an der Welle über das wellenförmige Ende 14 verschraubt. Mit dem Verschrauben wird zunächst die Zwischenhülse über die Welle 4 gezogen, bis im unteren Bereich der zentralen Bohrung 1 des Arbeitskopfes 2 eine kraftschlüssige Verbindung hergestellt ist. Durch weiteres Verdrehen des Gewindeelementes 9 wird über die untere radiale Fläche der Sicherungshülse 15 das Spreizteil 12 gegen die konischen Flächen des Kragens 10 der Zwischenhülse 3 verspannt, so daß auch im oberen Bereich der zentralen Bohrung 1 des Arbeitskopfes 2 eine kraftschlüssige Verbindung erzielt wird. Durch diese Verbindung ist eine feste Lagerung des Arbeitskopfes zumindest im oberen und unteren Bereich der zentralen Bohrung 1 gegeben.

Trotz der Verkeilung der einzelnen Bauteile miteinander ist ein anschließendes Lösen des Arbeitskopfes über das Gewindeelement 9 ohne großen Kraftaufwand möglich.

Während bei der Ausführungsform nach Figur 1 das Gewindeelement 9 auf das Außengewinde 8 der Welle 4 aufgeschraubt ist, ist bei der ansonsten baugleichen Ausführungsform nach Figur 3 das Gewindeelement 9 in ein Innengewinde 22 der Welle 4 eingeschraubt.

Um ein Spreizen der Zwischenhülse 3 zu ermöglichen, sind sowohl vom unteren Ende ausgehend als auch vom oberen Ende aus axiale Schlitze 23 - in der gezeigten Ausführung drei dieser Schlitze an jedem Ende - vorhanden.

## Patentansprüche

1. Zentrifuge mit einem auf eine von einem Antriebsmotor angetriebene Welle aufgesetzten Arbeitskopf, bei der zwischen der Welle und einer zentralen Bohrung des Arbeitskopfes eine längsgeschlitzte Zwischenhülse angeordnet ist, die über ein Spreizteil mit Außenkegel im Bereich ihrer der Welle abgewandten oberen Stirnseite über ein an dem Ende der Welle verschraubtes Gewindeelement gegen die Bohrung verspannt ist, dadurch gekennzeichnet, daß die Welle (4) ein konisches Ende (5) aufweist, die Zwischenhülse (3) eine konische diesem Ende (5) angepaßte Innenfläche besitzt und daß das Gewindeelement (9) an seinem Außenumfang einen Vorsprüng (18) aufweist, der im ungespreizten Zustand der Zwischenhülse gegen die Innenseite einer Anschlagfläche (10) der Zwischenhülse (3) einerseits und gegen das spitz zulaufende Ende des Spreizteiles (12) andererseits anliegen.

2. Zentrifuge nach Anspruch 1, dadurch gekennzeichnet, daß der Vorsprüng (18) des Gewindeelements (9) durch einen umlaufenden Flansch gebildet sind, der gegen einen nach innen gerichteten umlaufenden Kragen (10) der Zwischenhülse (3) anliegt.

3. Zentrifuge nach Anspruch 2, dadurch gekennzeichnet, daß der umlaufende Kragen (10) am Ende der Zwischenhülse (3) gebildet ist.

4. Zentrifuge nach einem der Ansprüche 1 bis 3, dadurch gekennzeichnet, daß die Zwischenhülse (3) an ihrem dem Antriebsmotor zugewandten Ende einen Flansch (21) besitzt, auf dem der Arbeitskopf (2) aufliegt.

5. Zentrifuge nach einem der Ansprüche 1 bis 4, dadurch gekennzeichnet, daß das Spreizteil (12) an seinem keilförmigen Ende mindestens einen axialen Dehnungsschlitz aufweist.

6. Zentrifuge nach einem der Ansprüche 1 bis 5, dadurch gekennzeichnet, daß das Spreizteil (12) aus mindestens zwei schalenförmigen Teilen besteht.

7. Zentrifuge nach einem der Ansprüche 1 bis 6, dadurch gekennzeichnet, daß zwischen dem Vorsprüng (18) des Gewindeelementes (9) und der Anschlagfläche (10) der Zwischenhülse (3) ein Gleitring (19) angeordnet ist.

8. Zentrifuge nach einem der Ansprüche 1 bis 7, dadurch gekennzeichnet, daß der umlaufende Kragen (10) der Zwischenhülse (3) an seiner radialen Innenfläche dem Außenkegel des Spreizteiles (12) angepaßt ist.

## Claims

1. Centrifuge with a tool attachment placed on a shaft driven by a drive motor, with a longitudinally slotted intermediate sleeve arranged between the shaft and a central bore in the tool attachment, which is braced against the bore via an expansion element with a male taper in the area of its upper face opposite the shaft via a threaded element screwed to the end of the shaft, characterised in that the shaft (4) has a conical end (5), the intermediate sleeve (3) has a conical inner surface shaped to fit this end (5) and that the threaded element (9) has at its outer circumference a projection (18), which, in the unexpanded state of the intermediate sleeve, lies, on the one hand, against the inside of a stop face (10) of the intermediate sleeve (3) and, on the other hand, against the tapered end of the expansion element (12).

2. Centrifuge according to claim 1, characterised in that the projection (18) of the threaded element (9) is formed from a peripheral flange which lies against an inwardly directed peripheral collar (10) of the intermediate sleeve (3).

3. Centrifuge according to claim 2, characterised in that the peripheral collar (10) is formed at the end of the intermediate sleeve (3).

4. Centrifuge according to one of claims 1 to 3, characterised in that the end of the intermediate sleeve (3) adjacent to the drive motor has a flange (21) on which the tool attachment (20) is supported.

5. Centrifuge according to one of claims 1 to 4, characterised in that the expansion element (12) has at least one axial expansion slot at its tapered end.

6. Centrifuge according to one of claims 1 to 5, characterised in that the expansion element (12) consists of at least two saucer-shaped parts.

7. Centrifuge according to one of claims 1 to 6, characterised in that a sliding ring (19) is arranged between the projection (18) of the threaded element (9) and the stop face (10) of the intermediate sleeve (3).

8. Centrifuge according to one of claims 1 to 7, characterised in that the radial inner surface of the peripheral collar (10) of the intermediate sleeve (3) is shaped to fit the male taper of the expansion element (12).

**Revendications**

1. Centrifugeuse comportant une tête de travail engagée sur un arbre entraîné par un moteur d'entraînement, dans laquelle entre l'arbre et un alésage central de la tête de travail, est disposée une douille intermédiaire qui est fendue longitudinalement et qui est serrée contre l'alésage à l'aide d'une pièce d'expansion avec cône extérieur, au niveau de son côté frontal supérieur éloigné de l'arbre, au moyen d'un élément fileté vissé sur l'extrémité de l'arbre, caractérisée en ce que l'arbre (4) présente une extrémité conique (5) et la douille intermédiaire (3) possède une surface intérieure conique adaptée à ladite extrémité (5), et en ce que l'élément fileté (9) comporte sur sa périphérie extérieure une partie en saillie (18), qui lorsque la douille intermédiaire est dans son état où elle n'a pas subi l'expansion, s'appuie d'une part contre le côté intérieur d'une surface de butée (10) de la douille intermédiaire (3), et d'autre part contre l'extrémité se terminant en pointe, de la pièce d'expansion (12).

2. Centrifugeuse selon la revendication 1, caractérisée en ce que la partie en saillie (18) de l'élément fileté (9) est constituée par un flasque périphérique qui s'appuie contre un collet périphérique (10) dirigé vers l'intérieur, de la douille intermédiaire (3).

3. Centrifugeuse selon la revendication 2, caractérisée en ce que le collet périphérique (10) est formé à l'extrémité de la douille intermédiaire (3).

4. Centrifugeuse selon l'une des revendications 1 à 3, caractérisée en ce que la douille intermédiaire (3) comporte à son extrémité tournée vers le moteur d'entraînement, un flasque 21 sur lequel repose la tête de travail (2).

5. Centrifugeuse selon l'une des revendications 1 à 4, caractérisée en ce que la pièce d'expansion (12) comporte à son extrémité conique, au moins une fente axiale de dilatation.

6. Centrifugeuse selon l'une des revendications 1 à 5, caractérisée en ce que la pièce d'expansion (12) est constituée par au moins deux pièces en forme de coupelle.

7. Centrifugeuse selon l'une des revendications 1 à 6, caractérisée en ce qu'un anneau de glissement (19 est disposé entre la partie en saillie (18) de l'élément fileté (9) et la surface de butée (10) de la douille intermédiaire (3).

8. Centrifugeuse selon l'une des revendications 1 à 7, caractérisée en ce que le collet périphérique (10) de la douille intermédiaire (3) est adapté, sur sa surface radialement intérieure, au cône extérieur de la pièce d'expansion (12).

FIG. 1

FIG. 2

FIG. 3